# EUROPEAN PATENT APPLICATION

(11) **EP 4 610 210 A1**
(43) Date of publication of application: **03.09.2025**
(21) Application number: 23882258.9
(22) Date of filing: 06.09.2023
(51) Int. Cl.: B66C 13/12, B66C 13/22, B66C 23/42

(54) **CRANE**

(30) Priority: 25.10.2022 JP 2022170618
(71) Applicant: TADANO LTD., Takamatsu-shi, Kagawa 761-0185 (JP)
(72) Inventor: NOGUCHI, Kazunari, Takamatsu-shi, Kagawa 761-0185 (JP)
(74) Representative: MFG Patentanwälte Meyer-Wildhagen Meggle-Freund Gerhard PartG mbB
(86) International application number: PCT/JP2023/032464
(87) International publication number: WO 2024/090045

(57) **Abstract**

This crane, which has a rotary body for supporting an boom, comprises: a traveling vehicle body which has a main frame for supporting the rotary body, and which travels using electrical power; a first outrigger provided to a rear section of the main frame; a second outrigger provided further to the rear side than the first outrigger in the rear section of the main frame; and a power feed unit having a rechargeable battery for supplying electrical power to the traveling vehicle body, wherein the power feed unit has a charging port unit in a space above the second outrigger and beside the main frame.

## Description

### Technical Field

The present invention relates to a crane.

### Background Art

Patent Literature 1 discloses a mobile crane including a lower traveling vehicle body having a traveling function and an upper rotary body provided in a turnable state on an upper part of the lower traveling vehicle body. The lower traveling vehicle body includes an engine and travels on the basis of the power of the engine.

### Citation List

### Patent Literature

Patent Literature 1: JP 2021-46319 A

### Summary of the Invention

### Problems to be Solved by the Invention

In recent years, there has been a demand for motorized cranes as described above from the viewpoint of environmental protection and the like.

An object of the present invention is to provide a crane that can travel by electrical power.

### Solutions to Problems

One aspect of a crane according to the present invention is
a crane which has a rotary body for supporting an boom, including:
a traveling vehicle body which has a main frame for supporting the rotary body, and which travels using electrical power;
a first outrigger which is provided to a rear section of the main frame;
a second outrigger which is provided further to a rear side than the first outrigger in the rear section of the main frame; and
a power feed unit which has a rechargeable battery for supplying the electrical power to the traveling vehicle body, in which
the power feed unit has a charging port unit in a space above the second outrigger and beside the main frame.

### Effects of the Invention

According to the present invention, it is possible to provide a crane that can travel by electrical power.

### Brief Description of Drawings

Fig. 1 is a schematic view of a mobile crane according to an embodiment.
Fig. 2 is a block diagram schematically illustrating a configuration of a high-voltage system.
Fig. 3 is a plan view of constituent members of a main frame and the high-voltage system.
Fig. 4 is an enlarged view corresponding to an X₁ portion in Fig. 3.
Fig. 5 is a view taken from the direction of arrow A₁ in Fig. 3.
Fig. 6 is a view taken from the direction of arrow A₂ in Fig. 3.
Fig. 7 is a view taken from the direction of arrow A₃ in Fig. 3.
Fig. 8 is a view taken from the direction of arrow A₄ in Fig. 3.

### Description of Embodiments

Hereinafter, an example of an embodiment according to the present invention will be described in detail based on the drawings. Note that a crane according to the embodiment described below is an example of the crane according to the present invention, and the present invention is not limited to the embodiments described below.

### [Embodiment]

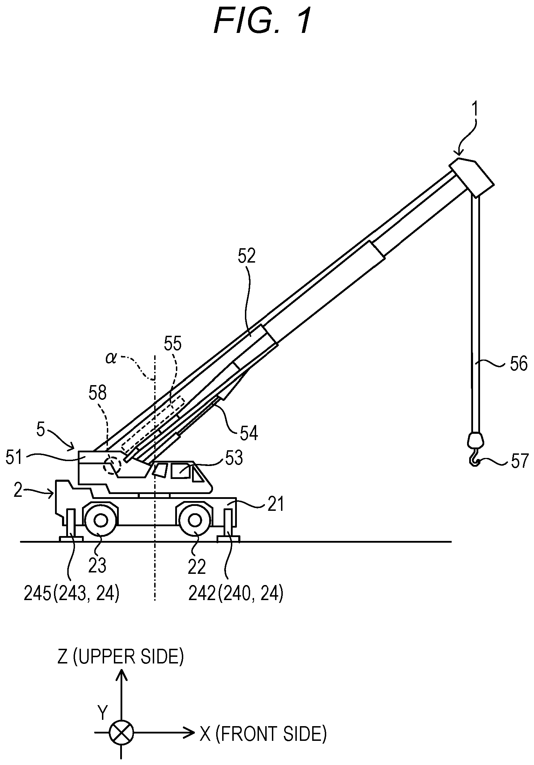

Fig. 1 is a schematic view of a mobile crane 1 (in the illustrated case, a rough terrain crane) according to the present embodiment. Examples of the mobile crane include an all-terrain crane, a truck crane, and a loading truck crane (also referred to as a cargo crane).

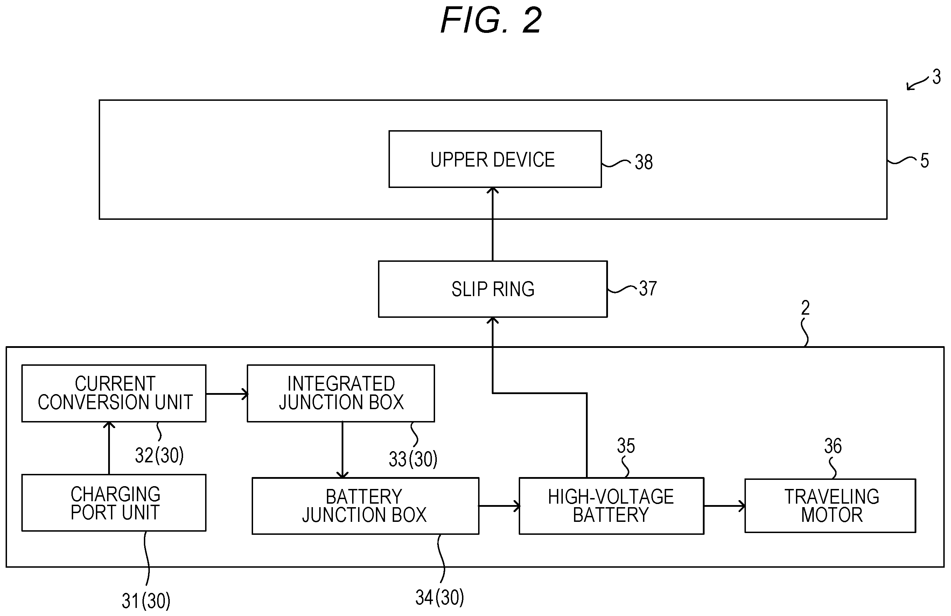

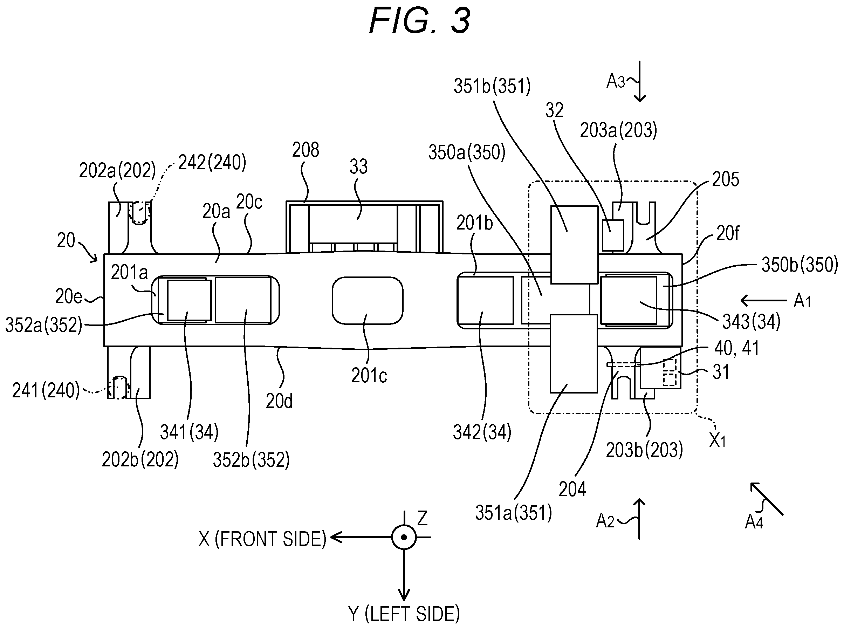

The mobile crane 1 includes a lower traveling vehicle body 2 and an upper rotary body 5. The mobile crane 1 is an electric crane including a high-voltage battery 35 (see Figs. 2 and 3). The mobile crane 1 travels on the basis of the electrical power supplied from the high-voltage battery 35. That is, the mobile crane 1 does not include an engine.

In addition, the mobile crane 1 executes an operation other than traveling (for example, crane operations and/or heating) on the basis of the electrical power supplied from the high-voltage battery 35. Examples of the crane operation include a turning operation and/or a winch operation in a cargo conveyance operation. Hereinafter, a specific configuration of the mobile crane 1 will be described.

First, the configuration of the upper rotary body 5 will be described with reference to Figs. 1 and 2. Fig. 1 is a schematic view of the mobile crane 1. Fig. 2 is a block diagram schematically illustrating a configuration of a high-voltage system 3 mounted on the mobile crane 1.

Note that the high-voltage system 3 is a system using, as a power source, the high-voltage battery 35 described later, and includes the high-voltage battery 35 and an element electrically connected to the high-voltage battery 35. Fig. 2 illustrates main elements constituting the high-voltage system 3. However, the high-voltage system 3 may include elements other than the main elements illustrated in Fig. 2.

The upper rotary body 5 is provided on the upper part of the lower traveling vehicle body 2, and can turn about a turning center axis α with respect to the lower traveling vehicle body 2. The upper rotary body 5 includes a turning base 51, a telescopic boom 52, and a cab 53.

The turning base 51 is supported by the upper part of the lower traveling vehicle body 2 through a bearing (not illustrated). The turning base 51 turns on the basis of the power generated by a turning actuator (not illustrated) provided in the upper rotary body 5. In the present embodiment, the turning actuator is a hydraulic motor. The motor operates on the basis of supply and discharge of hydraulic oil.

The hydraulic oil is supplied from the lower traveling vehicle body **2.** Note that the turning actuator may be an electric actuator (for example, an electric motor). In this case, the turning actuator is driven on the basis of the electrical power supplied from the high-voltage battery 35 described later.

The telescopic boom 52 is supported by the turning base 51 and includes a plurality of booms telescopically in combination. The telescopic boom 52 is raised and lowered on the basis of the power generated by a derricking actuator (specifically, a derricking cylinder 54).

The derricking cylinder 54 is a telescopic hydraulic cylinder and is provided in the upper rotary body **5.** The derricking cylinder 54 operates on the basis of supply or discharge of hydraulic oil. Note that the hydraulic oil is supplied from the lower traveling vehicle body 2.

Note that the derricking actuator may be an electric actuator (for example, an electric motor). In this case, the derricking actuator is driven on the basis of the electrical power supplied from the high-voltage battery 35 described later.

In addition, the telescopic boom 52 extends and retracts on the basis of the power generated by a telescopic actuator (Specifically, a telescopic cylinder 55). The telescopic cylinder 55 is a hydraulic cylinder and is provided inside the telescopic boom 52.

The telescopic cylinder 55 operates on the basis of supply and discharge of hydraulic oil. Note that the hydraulic oil is supplied from the lower traveling vehicle body 2. Note that the telescopic actuator may be an electric actuator (for example, an electric motor). In this case, the telescopic actuator is driven on the basis of the electrical power supplied from the high-voltage battery 35 described later.

In addition, the telescopic boom 52 supports a wire rope 56. The wire rope 56 hangs down from a distal end of the telescopic boom 52, and a hook 57 is provided at the distal end. A part of the wire rope 56 is wound around a winch 58.

The winch 58 drives on the basis of the power generated by a winch actuator (not illustrated). In the present embodiment, the winch actuator is provided on the turning base 51 and is a hydraulic motor. The motor operates on the basis of supply or discharge of hydraulic oil.

The hydraulic oil is supplied from the lower traveling vehicle body 2. Note that the winch actuator may be an electric actuator (for example, an electric motor). In this case, the winch actuator is driven on the basis of the electrical power supplied from the high-voltage battery 35 described later.

When the winch 58 rotates, the wire rope 56 is wound up or unwound according to the rotation direction of the winch 58. Note that the motor for winching may be an electric motor. In this case, the electric motor for winching is driven on the basis of the electrical power supplied from the high-voltage battery 35 described later.

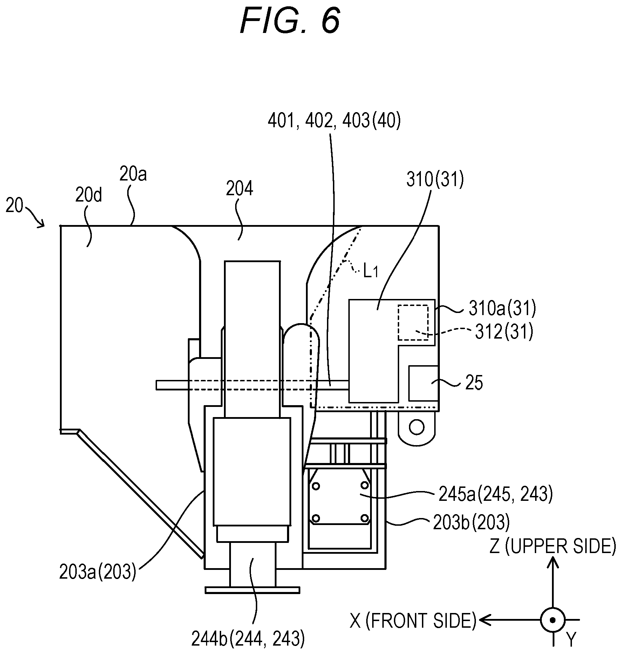

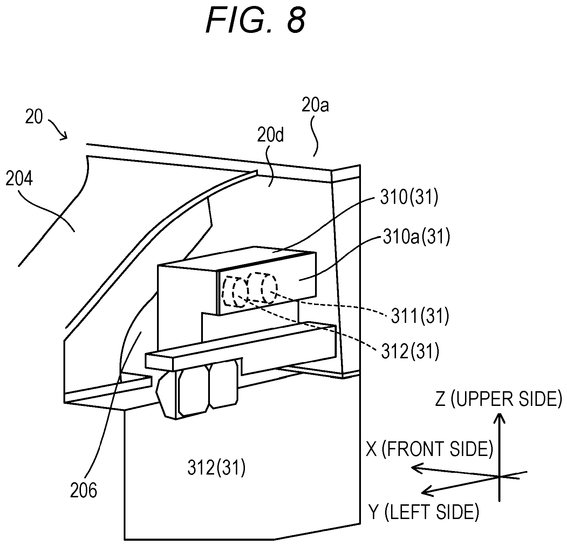

Next, the lower traveling vehicle body 2 will be described with reference to Figs. 1 to 8. Note that in describing the structure of the lower traveling vehicle body 2, an orthogonal coordinate system (X, Y, Z) illustrated in each drawing is used. An X direction coincides with the front-rear direction of the lower traveling vehicle body 2. The +side in the X direction coincides with the front side of the lower traveling vehicle body 2. The -side in the X direction coincides with the rear side of the lower traveling vehicle body 2. A Y direction coincides with the left-right direction of the lower traveling vehicle body 2 and the vehicle width direction of the mobile crane 1. The +side in the Y direction coincides with the left side when the front is viewed from the lower traveling vehicle body 2. The -side in the Y direction coincides with the right side when the front is viewed from the lower traveling vehicle body 2. A Z direction coincides with the vertical direction of the lower traveling vehicle body 2. The +side in the Z direction coincides with the upper side of the lower traveling vehicle body 2. The -side of the Z direction coincides with the bottom side of the lower traveling vehicle body 2.

The lower traveling vehicle body 2 is capable of traveling by electrical power. Specifically, the lower traveling vehicle body 2 includes a main frame 20, a body 21, front tires 22, rear tires 23, and an outrigger 24.

As illustrated in Fig. 3, the main frame 20 is a box-shaped member extending in the front-rear direction and having a rectangular cross-sectional shape, and constitutes a framework of the lower traveling vehicle body 2. The main frame 20 includes an upper plate 20a, a lower plate 20b, a right plate 20c, a left plate 20d, a front plate 20e, and a rear plate 20f.

In addition, the main frame 20 has a front battery housing space 201a and a rear battery housing space 201b formed by a through hole penetrating the main frame 20 in the vertical direction.

The front battery housing space 201a is provided between a central section and a front end section in the front-rear direction in the main frame 20.

In addition, the rear battery housing space 201b is provided between the central section and a rear end portion in the front-rear direction in the main frame 20.

In the main frame 20, a cross-sectional shape of a portion where the front battery housing space 201a and the rear battery housing space 201b are formed is a closed cross section formed by a plurality of continuous plates. Note that the cross section of the main frame 20 means a section taken along a YZ plane from the main frame 20.

In addition, the main frame 20 has a slip ring arrangement space 201c formed by a through hole penetrating the main frame 20 in the vertical direction at the central section in the front-rear direction.

The main frame 20 has a front outrigger support 202 at the front end. The front outrigger support 202 includes a left outrigger support 202a and a right outrigger support 202b.

Each of the left outrigger support 202a and the right outrigger support 202b has a tubular shape extending in the left-right direction. The left outrigger support 202a and the right outrigger support 202b are displaced back and forth and are adjacent to each other back and forth. The left outrigger support 202a is provided in front of the right outrigger support 202b.

The main frame 20 has a rear outrigger support 203 at the rear end. The rear outrigger support 203 includes a left outrigger support 203a and a right outrigger support 203b.

The left outrigger support 203a supports a left outrigger 244 of a rear outrigger 243 described later. The left outrigger support 203a has a tubular shape extending in the left-right direction. The right end of the left outrigger support 203a protrudes rightward from the right plate 20c of the main frame 20. The left end of the left outrigger support 203a protrudes leftward from the left plate 20d of the main frame 20.

The right outrigger support 203b supports a right outrigger 245 of the rear outrigger 243 described later. The right outrigger support 203b has a tubular shape extending in the left-right direction. The right end of the right outrigger support 203b protrudes rightward from the right plate 20c of the main frame 20. The left end of the right outrigger support 203b protrudes leftward from the left plate 20d of the main frame 20.

The left outrigger support 203a and the right outrigger support 203b are arranged in the state of being displaced back and forth and in the state of being adjacent to each other back and forth. The left outrigger support 203a is provided in front of the right outrigger support 203b.

The main frame 20 has a pair of support frames 204 and 205 at the rear end.

The support frame 204 corresponds to an example of a front support frame, and is a member for supporting the left outrigger support 203a with respect to the main frame 20. The support frame 204 extends leftward from the left plate 20d of the main frame 20. The support frame 204 is provided above the left end of the left outrigger support 203a in the rear outrigger support 203. In other words, the support frame 204 is arranged above the left end (base end) of the right outrigger 245 on the rear side described later and in front of a space on the left side of the left plate 20d of the main frame 20. Note that the space is provided with a power feed unit 30 described later.

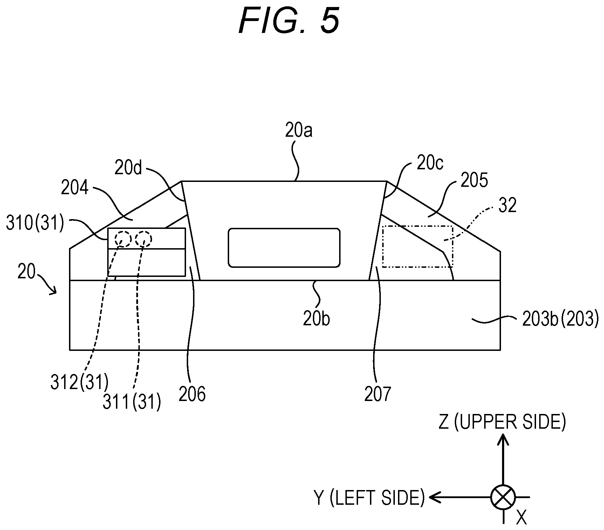

The right end of the support frame 204 is connected to the upper end of the left plate 20d. The left end of the support frame 204 is connected to the left end of the left outrigger support 203a. As illustrated in Fig. 5, the support frame 204 is inclined such that the left end is positioned below the right end.

As illustrated in Fig. 3, the front surface and the rear surface of the right end (base end) of the support frame 204 are curved. Such a configuration contributes to suppression of occurrence of stress concentration on the right end (base end) of the support frame 204.

A tunnel-like space 206 (see Fig. 5) which is open in the front-rear direction is provided below the support frame 204. The space 206 is defined by the lower surface of the support frame 204 and the upper surface of the left outrigger support 203a. In the space 206, a cable 40 connecting a normal charging port 311 described later and a current conversion unit 32 and a cable 41 connecting a quick charging port 312 and an integrated junction box 33 are routed.

The support frame 205 corresponds to an example of a rear support frame, and is a member for supporting the right outrigger support 203b with respect to the main frame 20. The support frame 205 extends rightward from the right plate 20c of the main frame 20. The support frame 205 is provided above the right end of the right outrigger support 203b in the rear outrigger support 203. In other words, the support frame 205 is arranged above the right end (base end) of the left outrigger 244 on the rear side described later and behind a space on the right side of the right plate 20c of the main frame 20. Note that the space is provided with a current conversion unit 32 described later.

The left end of the support frame 205 is connected to the upper end of the right plate 20c. The right end of the support frame 205 is connected to the right end of the right outrigger support 203b. As illustrated in Fig. 5, the support frame 205 is inclined such that the right end is positioned below the left end.

As illustrated in Fig. 3, the front surface and the rear surface of the left end (base end) of the support frame 205 are curved. Such a configuration contributes to suppression of occurrence of stress concentration on the left end (base end) of the support frame 205.

A tunnel-like space 207 (see Fig. 5) which is open in the front-rear direction exists below the support frame 205. The space 207 is defined by the lower surface of the support frame 205 and the upper surface of the right outrigger support 203b. The front end and the rear end of the space 207 are open.

In addition, the main frame 20 has a side support 208 at the central section in the front-rear direction. In the present embodiment, the side support 208 is fixed to the right plate 20c of the main frame 20. The side support 208 supports the integrated junction box 33 described later.

The body 21 (see Fig. 1) is a member constituting the outer shape of the lower traveling vehicle body 2, and is supported by the main frame 20.

The front tires 22 are rotatably supported at both ends of a front axle (not illustrated). The rear tires 23 are rotatably supported at both ends of a rear axle (not illustrated).

The outrigger 24 includes a front outrigger 240 and a rear outrigger 243.

The front outrigger 240 includes a left outrigger 241 and a right outrigger 242. The left outrigger 241 is supported by the left outrigger support 202a of the front outrigger support 202. The right outrigger 242 is supported by the right outrigger support 202b of the front outrigger support 202.

The rear outrigger 243 is provided at the rear section of the main frame 20. The rear outrigger 243 includes the left outrigger 244 and the right outrigger 245 provided to be displaced back and forth.

The left outrigger 244 corresponds to an example of a first outrigger, and is supported by the left outrigger support 203a of the rear outrigger support 203. The left outrigger 244 is an outrigger that protrudes leftward during use. The left outrigger 244 includes a lateral outrigger 244a and a vertical outrigger 244b.

The lateral outrigger 244a extends in the left-right direction and is inserted into the left outrigger support 203a of the rear outrigger support 203. The lateral outrigger 244a is movable in the left-right direction.

As described above, the left outrigger support 203a is supported by the support frame 204. Therefore, the lateral outrigger 244a can be regarded as being supported by the support frame 204.

The vertical outrigger 244b is fixed to the left end of the lateral outrigger 244a. The vertical outrigger 244b is movable (extendable and retractable) in the vertical direction.

The right outrigger 245 corresponds to an example of a second outrigger, and is supported by the right outrigger support 203b of the rear outrigger support 203. The right outrigger 245 is an outrigger that protrudes rightward during use. The right outrigger 245 is provided behind the left outrigger 244.

The right outrigger 245 includes a lateral outrigger 245a and a vertical outrigger 245b. The lateral outrigger 245a extends in the left-right direction and is inserted into the right outrigger support 203b of the rear outrigger support 203.

The lateral outrigger 245a is movable in the left-right direction. As described above, the right outrigger support 203b is supported by the support frame 205. Therefore, the lateral outrigger 245a can be regarded as being supported by the support frame 205.

The vertical outrigger 245b is fixed to the right end of the lateral outrigger 245a. The vertical outrigger 245b is movable (extendable and retractable) in the vertical direction.

In addition, the mobile crane 1 of the present embodiment includes the high-voltage system 3. The high-voltage system 3 is a system for executing the traveling of the lower traveling vehicle body 2 and an operation (for example, a crane operation and/or heating) different from the traveling in the mobile crane 1, on the basis of the electrical power supplied from the high-voltage battery 35 described later. The configuration of the high-voltage system 3 will be described below.

Note that although illustration and detailed description are omitted, the mobile crane 1 of the present embodiment also includes a low-voltage system. The low-voltage system is a system for executing predetermined processing on the mobile crane 1 on the basis of the electrical power supplied from a low-voltage battery (not illustrated) having a voltage lower than that of the high-voltage battery 35. In addition, the low-voltage system is also a system for transmitting a control signal for causing the mobile crane 1 to execute the predetermined processing.

As illustrated in Fig. 2, the high-voltage system 3 includes a power feed unit 30, a traveling motor 36, a slip ring 37, and an upper device 38 as main elements.

The power feed unit 30 is a unit for charging the high-voltage battery 35. The power feed unit 30 includes a charging port unit 31, a current conversion unit 32, and a high-voltage battery 35. In addition, the power feed unit 30 includes the integrated junction box 33 and a battery junction box 34.

The charging port unit 31 is provided at the rear end section of the main frame 20. Specifically, the charging port unit 31 is arranged in a space above the rear outrigger 243 and beside the main frame 20 in the lower traveling vehicle body **2.** More specifically, the charging port unit 31 is arranged in a space above the left end (base end) of the right outrigger 245 on the rear side and on the left side of the left plate 20d of the main frame 20.

Note that in the present embodiment, the right outrigger 242 of the rear outrigger 243 is provided behind the left outrigger 241 of the rear outrigger 243. However, the configuration of the rear outrigger is not limited to the configuration of the rear outrigger 243 of the present embodiment. Specifically, the right outrigger in the rear outrigger may be provided in front of the left outrigger in the rear outrigger. In this case, the charging port unit may be arranged in a space above the right end (base end) of the left outrigger on the rear side and on the right side of the right plate 20c of the main frame 20. In addition, the current conversion unit 32 is arranged in a space above the left end (base end) of the right outrigger 242 on the rear side and on the left side of the left plate 20d of the main frame 20.

In other words, the charging port unit 31 is arranged in a space above a portion (the left end of the right outrigger support 203b on the rear side) existing on the left side of the left plate 20d of the main frame 20 in the right outrigger support 203b on the rear side. The space is also a space existing behind the support frame 204.

The charging port unit 31 includes a housing 310, the normal charging port 311, and the quick charging port 312.

The housing 310 has a box shape and has a housing portion. The housing 310 is supported by the main frame 20 via a support (not illustrated). The housing 310 has an openable/closable lid 310a on a rear surface. An operator can access the housing portion by opening the lid 310a. Note that the shape of the housing is not limited to the shape of the housing 310 of the present embodiment.

In the main frame 20, a light 25 is provided behind the rear end of the charging port unit 31 or below the lower end of the charging port unit 31. Such a configuration contributes to suppression of occurrence of damage in the charging port unit 31. The light 25 is, for example, a brake lamp or a direction indication lamp. Specifically, the lower end of the charging port unit 31 (the normal charging port 311 and the quick charging port 312) is positioned above the upper end of the light 25. In addition, the rear end of the charging port unit 31 (the normal charging port 311 and the quick charging port 312) is positioned in front of the rear end of the light 25.

The normal charging port 311 and the quick charging port 312 correspond to an example of the charging port, and are provided in the housing portion of the housing 310. The normal charging port 311 is a charging port for normal charging. When performing normal charging, the operator opens the lid 310a and connects a plug for normal charging of a charging facility to the normal charging port 311.

The quick charging port 312 is a charging port for quick charging. When performing quick charging, the operator opens the lid 310a and connects a plug for quick charging of the charging facility to the quick charging port 312.

In a case where a charging method is normal charging, an alternating current is supplied from the charging facility to the normal charging port 311. On the other hand, in a case where the charging method is quick charging, a direct current is supplied from the charging facility to the quick charging port 312.

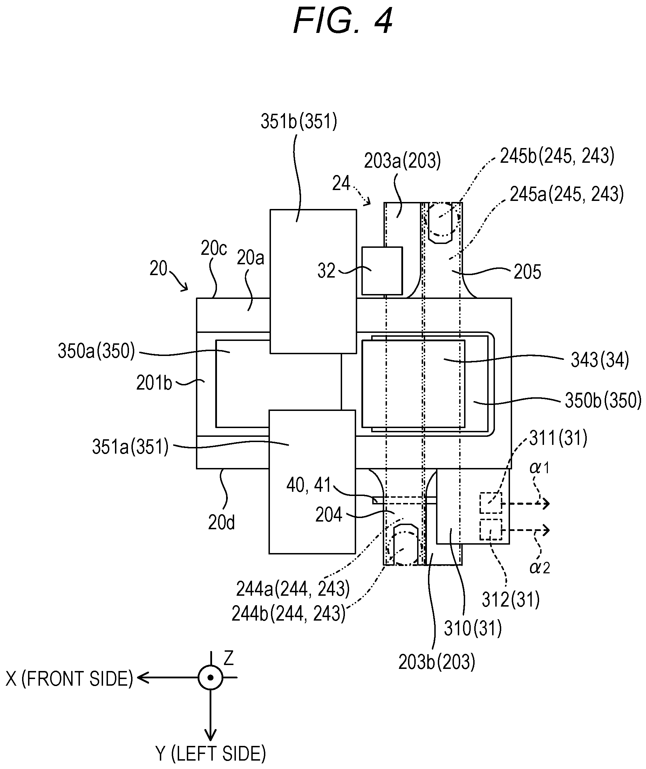

The normal charging port 311 is connected via the cable 40 (see Figs. 3 and 4) to the current conversion unit 32 described later. The quick charging port 312 is connected via the cable 41 (see Figs. 3 and 4) to the integrated junction box 33 described later. That is, the quick charging port 312 is not connected to the current conversion unit 32.

The upper end of the charging port unit 31 (housing 310) is positioned below the upper surface (that is, upper plate 20a) of the main frame 20. The rear end of the charging port unit 31 (housing 310) is positioned in front of the rear surface (that is, rear plate 20f) of the main frame 20. In addition, the upper ends of the normal charging port 311 and the quick charging port 312 are positioned below the upper surface (that is, upper plate 20a) of the main frame 20. In addition, the rear ends of the normal charging port 311 and the quick charging port 312 are positioned in front of the rear surface (that is, rear plate 20f) of the main frame 20. Such a configuration contributes to suppression of occurrence of damage in the charging port unit 31 (in particular, the normal charging port 311 and the quick charging port 312).

In addition, the charging port unit 31 includes various indicators (not illustrated). The indicators include, for example, an indicator indicating the state of charge of the high-voltage battery 35. Such an indicator is also arranged in the housing portion of the housing 310.

The normal charging port 311 and the quick charging port 312 face rearward. Here, the state of facing rearward means a state in which normal lines α₁ and α₂ of the rear end surfaces of the normal charging port 311 and the quick charging port 312 include a rearward component (a component on -side in the X direction). In the present embodiment, the normal charging port 311 and the quick charging port 312 are directed such that the normal lines α₁ and α₂ are parallel to the front-rear direction (in other words, only rearward components). Note that the normal charging port 311 and the quick charging port 312 may be arranged such that the normal lines α₁ and α₂ face, for example, diagonally rearward to the left.

The current conversion unit 32 includes an on-board charger, and is provided in a space above the left outrigger 244 and beside the main frame 20 in the lower traveling vehicle body 2. Specifically, the current conversion unit 32 is arranged in a space above the right end (base end) of the left outrigger 244 on the rear side and on the right side of the right plate 20c of the main frame 20.

In other words, the current conversion unit 32 is arranged in a space existing above a portion (the right end of the left outrigger support 203a on the rear side) existing on the right side of the right plate 20c of the main frame 20 in the rear left outrigger support 203a. The space is also a space existing between, in the front-rear direction, the support frame 205 and a tire fender 230 of the rear tire 23 on the right side. The tire fender 230 corresponds to an example of a rear wheel fender.

The current conversion unit 32 converts the alternating current supplied from the charging port unit 31 into a direct current. Then, the current conversion unit 32 sends the direct current to the high-voltage battery 35.

Specifically, the input-side terminal (not illustrated) of the current conversion unit 32 is connected to the normal charging port 311 via the cable 40. The output-side terminal (not illustrated) of the current conversion unit 32 is connected via a cable (not illustrated) to the input-side terminal (not illustrated) of the integrated junction box 33 described later. The current conversion unit 32 sends a direct current to the high-voltage battery 35 via the integrated junction box 33.

The current conversion unit 32 includes a plurality of current conversion devices. Specifically, the current conversion unit 32 includes a first current conversion device 321, a second current conversion device 322, and a third current conversion device 323. Note that the number of current conversion devices is not limited to the number of current conversion devices in the present embodiment.

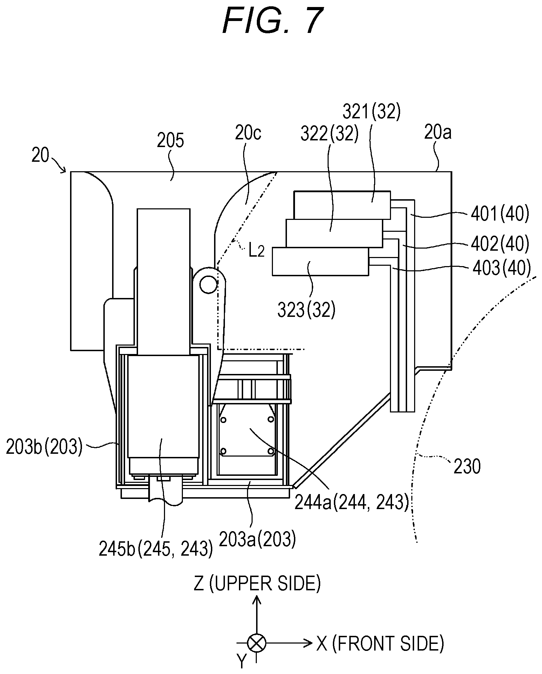

As illustrated in Fig. 7, the first current conversion device 321, the second current conversion device 322, and the third current conversion device 323 are provided in the state of being offset in the front-rear direction and in a state of being vertically stacked. The rear end surface and the front end surface of the first current conversion device 321 arranged in the upper stage are positioned in front of the rear end surfaces and the front end surfaces of the second current conversion device 322 and the third current conversion device 323. The rear end surface and the front end surface of the second current conversion device 322 arranged in the middle stage are positioned in front of the rear end surface and the front end surface of the third current conversion device 323.

As illustrated in Fig. 7, the first current conversion device 321, the second current conversion device 322, and the third current conversion device 323 are arranged along the shape (curved surface shape) of the front surface of the support frame 205.

The input-side terminals (not illustrated) of the first current conversion device 321, the second current conversion device 322, and the third current conversion device 323 are connected to the output-side terminal (not illustrated) of the normal charging port 311 via a first cable 401, a second cable 402, and a third cable 403.

The first cable 401, the second cable 402, and the third cable 403 constitute the cable 40 described above. An electric path (cable 40) connecting the normal charging port 311 and the current conversion unit 32 is branched into three electric paths (the first cable 401, the second cable 402, and the third cable 403) inside the housing 310.

As illustrated in Fig. 7, the first cable 401, the second cable 402, and the third cable 403 extend downward from the first cable 401, the second cable 402, and the third cable 403, and are routed so as to pass under the main frame 20.

The output-side terminal (not illustrated) of the current conversion unit 32 (the first current conversion device 321, the second current conversion device 322, and the third current conversion device 323) is connected via a cable (not illustrated) to the input-side terminal of the integrated junction box 33 described later.

The integrated junction box 33 is a device that supplies the electrical power (direct current) supplied from the charging port unit 31 to the high-voltage battery 35 in a distributed manner. The integrated junction box 33 is supported by the side support 208 of the main frame 20.

Specifically, the input-side terminal (not illustrated) for normal charging of the integrated junction box 33 is connected via a cable (not illustrated) to the output-side terminal of the current conversion unit 32. In addition, the input-side terminal (not illustrated) for quick charging of the integrated junction box 33 is connected via the cable 41 (see Figs. 3 and 4) to the output-side terminal (not illustrated) of the quick charging port 312.

The output-side terminal (not illustrated) of the integrated junction box 33 is connected via a cable (not illustrated) to the input-side terminal (not illustrated) of the battery junction box 34.

The battery junction box 34 is a device that supplies the electrical power supplied from the integrated junction box 33 to the high-voltage battery 35 in a distributed manner.

The battery junction box 34 includes a front junction box 341, a first rear junction box 342, and a second rear junction box 343.

The front junction box 341 is arranged above the front battery housing space 201a. That is, the front junction box 341 is arranged outside the main frame 20.

The input-side terminal (not illustrated) of the front junction box 341 is connected via a cable (not illustrated) to the output-side terminal (not illustrated) of the integrated junction box 33. The output-side terminal (not illustrated) of the front junction box 341 is connected via a cable (not illustrated) to the input-side terminal (not illustrated) of a front battery 352 (a first front battery 352a and a second front battery 352b) described later.

The first rear junction box 342 is arranged at the front end of the rear battery housing space 201b. That is, the first rear junction box 342 is arranged inside the main frame 20.

The upper surface of the first rear junction box 342 is positioned below the upper surface (that is, upper plate 20a) of the main frame 20. The input-side terminal (not illustrated) of the first rear junction box 342 is connected via a cable (not illustrated) to the output-side terminal (not illustrated) of the integrated junction box 33.

The output-side terminal (not illustrated) of the first rear junction box 342 is connected via a cable (not illustrated) to the input-side terminal (not illustrated) of a rear internal battery 350 (a first rear internal battery 350a and a second rear internal battery 350b) described later.

The second rear junction box 343 is arranged at the rear end of the rear battery housing space 201b. The lower half of the second rear junction box 343 is arranged inside the main frame 20.

The upper half of the second rear junction box 343 is positioned above the upper surface (that is, upper plate 20a) of the main frame 20. The second rear junction box 343 is arranged behind the first rear junction box 342.

The input-side terminal (not illustrated) of the second rear junction box 343 is connected via a cable (not illustrated) to the output-side terminal (not illustrated) of the integrated junction box 33. The output-side terminal of the second rear junction box 343 is connected via a cable (not illustrated) to the input-side terminal (not illustrated) of a rear external battery 351 (a first rear external battery 351a and a second rear external battery 351b) described later.

The high-voltage battery 35 corresponds to an example of a rechargeable battery, and supplies electrical power to an electric device constituting the mobile crane 1.

The high-voltage battery 35 includes a plurality of batteries. Specifically, the high-voltage battery 35 includes the rear internal battery 350, the rear external battery 351, and the front battery 352.

The rear internal battery 350 includes the first rear internal battery 350a and the second rear internal battery 350b. The first rear internal battery 350a and the second rear internal battery 350b are arranged in the rear battery housing space 201b. In other words, the first rear internal battery 350a and the second rear internal battery 350b are arranged inside the main frame 20.

The upper end surfaces of the first rear internal battery 350a and the second rear internal battery 350b are positioned below the upper surface (that is, upper plate 20a) of the main frame 20. The first rear internal battery 350a and the second rear internal battery 350b are arranged side by side in the front-rear direction.

The first rear internal battery 350a and the second rear internal battery 350b are fixed to the main frame 20 via a fixing device such as a bracket (not illustrated).

The input-side terminals (not illustrated) of the first rear internal battery 350a and the second rear internal battery 350b are connected via cables (not illustrated) to the output-side terminal (not illustrated) of the first rear junction box 342.

The output-side terminals (not illustrated) of the first rear internal battery 350a and the second rear internal battery 350b are connected to the input-side terminal (not illustrated) of the traveling motor 36.

Note that a junction box and/or an inverter may be provided between the first rear internal battery 350a and the second rear internal battery 350b, and the traveling motor 36.

As described above, in the present embodiment, since the dead space of the main frame 20 can be effectively utilized, the rear internal battery 350 can be compactly arranged, and the damage of the rear internal battery 350 due to impact or the like can be suppressed.

The rear external battery 351 includes the first rear external battery 351a and the second rear external battery 351b. The first rear external battery 351a and the second rear external battery 351b are arranged above the rear battery housing space 201b. In other words, the first rear external battery 351a and the second rear external battery 351b are arranged above the upper surface (that is, upper plate 20a) of the main frame 20.

That is, the first rear external battery 351a and the second rear external battery 351b are arranged outside the main frame 20. The first rear external battery 351a and the second rear external battery 351b are arranged side by side in the left-right direction.

The first rear external battery 351a and the second rear external battery 351b are fixed to the main frame 20 via a fixing device such as a bracket (not illustrated).

The input-side terminals (not illustrated) of the first rear external battery 351a and the second rear external battery 351b are connected via cables (not illustrated) to the output-side terminal (not illustrated) of the second rear junction box 343.

The output-side terminals (not illustrated) of the first rear external battery 351a and the second rear external battery 351b are connected via cables (not illustrated) to the input-side terminal (not illustrated) of the traveling motor 36.

Note that a junction box and/or an inverter may be provided between the first rear external battery 351a, the second rear external battery 351b, and the traveling motor 36.

The front battery 352 includes the first front battery 352a and the second front battery 352b. The first front battery 352a and the second front battery 352b are arranged in the front battery housing space 201a. In other words, the first front battery 352a and the second front battery 352b are arranged inside the main frame 20.

The upper end surfaces of the first front battery 352a and the second front battery 352b are positioned below the upper surface (that is, upper plate 20a) of the main frame 20. The first front battery 352a and the second front battery 352b are arranged side by side in the front-rear direction.

The first front battery 352a and the second front battery 352b are fixed to the main frame 20 via a fixing device such as a bracket (not illustrated).

The input-side terminals (not illustrated) of the first front battery 352a and the second front battery 352b are connected via cables (not illustrated) to the output-side terminal (not illustrated) of the front junction box 341.

The output-side terminals (not illustrated) of the first front battery 352a and the second front battery 352b are connected via cables (not illustrated) to the input-side terminal (not illustrated) of the traveling motor 36.

Note that a junction box and/or an inverter may be provided between the first front battery 352a and the second front battery 352b, and the traveling motor 36.

As described above, in the present embodiment, since the dead space of the main frame 20 can be effectively utilized, the front battery 352 can be compactly arranged, and the damage of the front battery 352 due to impact or the like can be suppressed.

Next, a charging path for charging the high-voltage battery 35 will be described.

First, in a case where the high-voltage battery 35 is charged by normal charging, the operator opens the lid 310a of the charging port unit 31 and connects the plug for normal charging of the charging facility to the normal charging port 311.

Then, an alternating current is supplied from the charging facility to the normal charging port 311. The alternating current is sent from the normal charging port 311 to the current conversion unit 32 via the cable 40. Then, in the current conversion unit 32, the alternating current is converted into a direct current.

Thereafter, the direct current is sent to the high-voltage battery 35 via the integrated junction box 33 and the battery junction box 34.

Next, in a case where the high-voltage battery 35 is charged by quick charging, the operator opens the lid 310a of the charging port unit 31 and connects the plug for normal charging of the charging facility to the quick charging port 312.

Then, a direct current is supplied from the charging facility to the quick charging port 312. The direct current is sent from the quick charging port 312 to the integrated junction box 33 via the cable 41.

Then, the direct current is sent from the integrated junction box 33 to the high-voltage battery 35 via the battery junction box 34.

The traveling motor 36 is driven on the basis of the electrical power supplied from the high-voltage battery 35 under the control of a control unit (not illustrated). The control unit adjusts the torque of the traveling motor 36.

The slip ring 37 is connected to the high-voltage battery 35 via a cable (not illustrated). The slip ring 37 is a device for sending the electrical power supplied from the high-voltage battery 35 from the lower traveling vehicle body 2 to the upper device 38 (see Fig. 2) of the upper rotary body **5.**

Note that the slip ring 37 is also used to send a current flowing through the low-voltage system and a control signal from the lower traveling vehicle body 2 to the upper device 38 of the upper rotary body 5.

The upper device 38 is a device that is provided in the upper rotary body 5 and operates on the basis of the electrical power of the high-voltage battery 35. Note that in a case where the turning actuator is an electric motor, the electric motor for turning corresponds to an example of the upper device. In addition, in a case where the winch actuator is an electric motor, the electric motor for winching is an example of the upper device. In this case, the slip ring 37 is connected to the electric motor for turning and the electric motor for winching through an upper junction box (not illustrated). Such an upper junction box functions to allocate, to the electric motor for turning and the electric motor for winching, the electrical power supplied from the high-voltage battery 35 through the slip ring 37.

When the electrical power of the high-voltage battery 35 is supplied, the electric motor for turning is driven on the basis of the electrical power. Then, the electric motor for turning turns the upper rotary body 5.

In addition, when the electrical power of the high-voltage battery 35 is supplied, the electric motor for winching is driven on the basis of the electrical power. Then, the electric motor for winching rotates a winch (not illustrated). As a result, the wire rope 56 is wound up or unwound, and the hook 57 ascends or descends.

### <Effects and Advantages of Present Embodiment>

According to the present embodiment having such a configuration as above, the mobile crane 1 capable of traveling on the basis of the electrical power of the high-voltage battery 35 can be achieved.

In addition, according to the present embodiment, the work efficiency of the charging work can be improved. In the case of the mobile crane 1 having the telescopic boom 52, since the telescopic boom 52 interferes with the charging facility, the mobile crane 1 cannot park forward in a parking space of the charging facility.

Therefore, in order to avoid interference between the telescopic boom 52 and the charging facility, the mobile crane 1 parks rearward in the parking space of the charging facility. In the present embodiment, since the normal charging port 311 and the quick charging port 312 are provided on the rear end of the mobile crane 1 in the state of facing rearward, the operator can efficiently perform the charging work in a state where the mobile crane 1 parks rearward in the parking space of the charging facility.

In addition, the operator may perform the charging work in a working state of the mobile crane 1. The working state means a state where the front outrigger 240 and the rear outrigger 243 protrude. In the present embodiment, the normal charging port 311 and the quick charging port 312 are provided on the rear end of the mobile crane 1 in the state of facing rearward. Therefore, when the operator connects the charging plug of the charging facility to the normal charging port 311 or the quick charging port 312, the rear outrigger 243 does not become an obstacle. As a result, according to the present embodiment, the efficiency of the charging work in the working state of the mobile crane 1 can be improved.

In addition, in a country where the mobile crane 1 travels on the left side of a public road like Japan, there may be a charging facility of a parallel parking system along the public road. In the present embodiment, since the charging port unit 31 is provided in the vicinity of the left end on the rear surface of the main frame 20, the charging port unit 31 can be arranged near the charging facility of the parallel parking system in a state where the mobile crane 1 parks in the charging facility.

In addition, in the present embodiment, the charging port unit 31 and the current conversion unit 32 are arranged in a space above the rear outrigger 243 and beside the main frame 20. The space is a space restricted by the shapes of the support frames 204 and 205, the rear outrigger 243, the light 25, the tire fender 230 of the rear tire 23, and the like.

In the present embodiment, the charging port unit 31 and the current conversion unit 32 with a devised configuration are arranged in the space subjected to such various restrictions. As described above, according to the present embodiment, the space in the mobile crane 1 can be effectively used.

In addition, in the present embodiment, as illustrated in Fig. 7, the first current conversion device 321, the second current conversion device 322, and the third current conversion device 323 constituting the current conversion unit 32 are provided in the state of being offset in the front-rear direction and in the state of being vertically stacked. Therefore, for example, a relatively large space for routing a cable or the like can be secured between the front surface of the support frame 205 and the current conversion unit 32. Such a configuration contributes to improvement of the degree of freedom of design. In addition, effects and advantages exhibited by the mobile crane 1 according to the present embodiment are as described above.

This application is based upon and claims the benefit of priority from Japanese Patent Application No. 2022-170618, filed on October 25, 2022, the entire contents of which are incorporated herein by reference.

### Industrial Applicability

A crane according to the present invention is not limited to a rough terrain crane and thus may be any type of mobile crane, such as an all-terrain crane, a truck crane, or a truck loader crane (also, referred to as a cargo crane).

### Reference Signs List

- 1: mobile crane
- 2: lower traveling vehicle body
- 20: main frame
- 20a: upper plate
- 20b: lower plate
- 20c: right plate
- 20d: left plate
- 20e: front plate
- 20f: rear plate
- 201a: front battery housing space
- 201b: rear battery housing space
- 201c: slip ring arrangement space
- 202: front outrigger support
- 202a: left outrigger support
- 202b: right outrigger support
- 203: rear outrigger support
- 203a: left outrigger support
- 203b: right outrigger support
- 204, 205: support frame
- 206, 207: space
- 208: side support
- 21: body
- 22: front tire
- 23: rear tire
- 230: tire fender
- 24: outrigger
- 240: front outrigger
- 241: left outrigger
- 242: right outrigger
- 243: rear outrigger
- 244: left outrigger
- 244a: lateral outrigger
- 244b: vertical outrigger
- 245: right outrigger
- 245a: lateral outrigger
- 245b: vertical outrigger
- 25: light
- 3: high-voltage system
- 30: power feed unit
- 31: charging port unit
- 310: housing
- 310a: lid
- 311: normal charging port
- 312: quick charging port
- 32: current conversion unit
- 321: first current conversion device
- 322: second current conversion device
- 323: third current conversion device
- 33: integrated junction box
- 34: battery junction box
- 341: front junction box
- 342: first rear junction box
- 343: second rear junction box
- 35: high-voltage battery
- 350: rear internal battery
- 350a: first rear internal battery
- 350b: second rear internal battery
- 351: rear external battery
- 351a: first rear external battery
- 351b: second rear external battery
- 352: front battery
- 352a: first front battery
- 352b: second front battery
- 36: traveling motor
- 37: slip ring
- 38: upper device
- 40: cable
- 401: first cable
- 402: second cable
- 403: third cable
- 41: cable
- 5: upper rotary body
- 51: turning base
- 52: telescopic boom
- 53: cab
- 54: derricking cylinder
- 55: telescopic cylinder
- 56: wire rope
- 57: hook
- 58: winch

## Claims

1. A crane which has a rotary body for supporting an boom, the crane comprising:
a traveling vehicle body which has a main frame for supporting the rotary body, and which travels using electrical power;
a first outrigger which is provided to a rear section of the main frame;
a second outrigger which is provided behind the first outrigger in the rear section of the main frame; and
a power feed unit which has a rechargeable battery for supplying the electrical power to the traveling vehicle body, wherein
the power feed unit has a charging port unit in a space above the second outrigger and beside the main frame.

2. The crane according to claim **1,** wherein
the first outrigger is a left outrigger protruding leftward during use,
the second outrigger is a right outrigger protruding rightward during use, and
the charging port unit is arranged in a space above the right outrigger and on a left side of the main frame.

3. The crane according to claim **1,** wherein
the charging port unit includes a housing arranged adjacent to the main frame and a charging port supported by the housing, and
the charging port faces rearward.

4. The crane according to claim **1,** wherein
the charging port unit includes a housing arranged adjacent to the main frame and a charging port supported by the housing, and
the charging port is arranged below an upper surface of the main frame and in front of a rear surface of the main frame.

5. The crane according to claim **1,** wherein
the charging port unit includes a housing arranged adjacent to the main frame and a charging port supported by the housing, and
the charging port is arranged in front of a rear end of a light arranged adjacent to the main frame or above an upper end of the light.

6. The crane according to claim **1,** wherein
the main frame includes a front support frame in front of a space beside the main frame, the front support frame extending laterally from the main frame and supporting the first outrigger and
a cable connecting the charging port unit and the rechargeable battery is routed in a space below the front support frame.

7. The crane according to claim **1,** wherein
the power feed unit includes a current conversion unit which converts an alternating current into a direct current and sends the direct current to the rechargeable battery, and
the charging port unit includes:
a normal charging port for normal charging which is connected to the rechargeable battery via the current conversion unit, and
a quick charging port for quick charging which is connected to the rechargeable battery without passing through the current conversion unit.
